# EUROPÄISCHE PATENTSCHRIFT

(11) **EP 3 052 828 B1**
(45) Veröffentlichungstag und Bekanntmachung des Hinweises auf die Patenterteilung: **11.11.2020**
(21) Anmeldenummer: 14776991.3
(22) Anmeldetag: 04.09.2014
(51) Int. Cl.: F16D 25/08, F16D 25/12, F15B 15/28

(54) **KOLBEN-ZYLINDER-ANORDNUNG**
PLUNGER-CYLINDER ASSEMBLY
AGENCEMENT PISTON-CYLINDRE

(30) Priorität: 02.10.2013 DE 102013220028
(43) Veröffentlichungstag der Anmeldung: 10.08.2016
(73) Patentinhaber: Schaeffler Technologies AG & Co. KG, 91074 Herzogenaurach (DE)
(72) Erfinder: SCHOENHOLZ, Jörg, 76872 Freckenfeld (DE); HERRMANN, Tim, 76461 Muggensturm (DE)
(86) Internationale Anmeldenummer: PCT/DE2014/200442
(87) Internationale Veröffentlichungsnummer: WO 2015/048953

(56) Entgegenhaltungen:
- DE-A1-102006 046 984
- DE-A1-102008 002 682
- DE-A1-102008 064 047
- DE-A1-102012 207 417
- DE-A1-102012 220 966

## Beschreibung

Die Erfindung betrifft eine Kolben-Zylinder-Anordnung, insbesondere für einen Geberzylinder eines Kupplungsbetätigungssystems in einem Kraftfahrzeug, mit einem Kolben, welcher axial beweglich in einem als Gehäuse ausgebildeten Zylinder angeordnet ist und einem Sensorsystem, welches an dem Gehäuse angeordnet ist und mit einem an dem Kolben befestigten Sensorbestandteil in einer Wirkverbindung steht.

In hydraulischen Kupplungsausrücksystemen, die in Kraftfahrzeugen Einsatz finden, werden Linearwegmesssysteme eingesetzt, um eine Position eines Kolbens, welcher in einem Geberzylinder geführt ist, zu erfassen, um den Betätigungszustand der Kupplung des Kraftfahrzeuges bestimmen zu können. Das Linearwegmesssystem umfasst ein Sensorsystem, das aus einer induktiven Sensoreinheit mit einem elektrisch leitfähigen Target, welches im Weiteren als Sensorbestandteil bezeichnet werden soll, besteht. Darüber hinaus ist es aber auch möglich, dass als Sensorsystem ein Hall-Sensor benutzt wird, welches als Sensorbestandteil einen Dauermagneten umfasst, der am Kolben positioniert ist. Durch die Bewegung des Kolbens wird der Sensorbestandteil in einem von dem Sensorsystem aufgespannten Magnetfeld bewegt oder spannt selbst ein Magnetfeld auf, welches an dem Sensor vorbeigeführt wird, wodurch sich ein Sensorsignal des Sensorsystems verändert.

Der Sensor selbst ist dabei auf eine Platine montiert, auf welcher auch gleichzeitig elektronische Komponenten, die beispielsweise als ASICs ausgebildet sind und alle notwendigen Funktionen für die Auswertung des Sensorsignals umfassen, befestigt sind. Die Platine ist auf dem, als Gehäuse ausgebildeten Zylinder des Geberzylinders angeordnet. Eine solche Platine erfordert relativ viel Platz und eine zusätzliche Anbindung an eine externe Steckerverbindung zur elektrischen Kontaktierung. Darüber hinaus ist die Platine störanfällig gegenüber Umwelteinflüssen wie Vibration und Temperatur sowie elektrischen Störungen. Zur Montage der Platine an dem Gehäuse sind zusätzliche Prozessschritte notwendig, was einen aufwändigeren Aufbau und zusätzliche Verbindungsstellen der Kolben-Zylinder-Anordnung notwendig macht.

Aus der DE 10 2012 220 966 A1 ist ein Sensor nach dem Oberbegriff des Anspruchs 1 offenbart. Weiterer Stand der Technik ist in der DE 10 2006 046984 A1 beschrieben.

Der Erfindung liegt somit die Aufgabe zugrunde, eine Kolben-Zylinder-Anordnung anzugeben, bei welcher das Sensorsystem mit wenigen Montageschritten und unter Reduzierung der elektrischen Schnittstellen an dem als Gehäuse ausgebildeten Zylinder befestigt ist.

Erfindungsgemäß ist die Aufgabe dadurch gelöst, dass das Sensorsystem auf einer Leadframe-Anordnung positioniert ist, welche in das Kunststoffgehäuse integriert ist. Eine Verbindungstechnik zur Fixierung und Kontaktierung mit einer Auswerteelektronik des Sensors wird dadurch vereinfacht, dass die elektronischen Komponenten direkt auf der Leadframe-Anordnung angeordnet sind. Auf die Verwendung einer Platine kann verzichtet werden, da die Leadframe-Anordnung neben der elektrischen Kontaktierung des Sensorsystems zuverlässig auch eine mechanische Stabilität des Sensorsystems gewährleistet. Durch diese Realisierung wird der benötigte Platzbedarf durch die Integration der Leadframe-Anordnung in das Gehäuse der Kolben-Zylinder-Anordnung minimiert und die Schnittstellenanzahl zwischen Sensorsystem und Steckereinrichtung reduziert. Somit wird eine bauraumoptimierte, hochintegrierte Kombination aus Kunststoffgehäuse und Sensorsystem ermöglicht.

Gemäß der Erfindung weist das Kunststoffgehäuse eine nach außen offene Ausnehmung auf, in welcher die, das Sensorsystem tragende Leadframe-Anordnung positioniert ist. Diese Ausnehmung dient dabei gleichzeitig als Sensorgehäuse, welche aus dem Gehäuse der Kolben-Zylinder-Anordnung hergestellt ist. Somit kann auf ein zusätzliches Sensorgehäuse verzichtet werden, wodurch der beanspruchte Bauraum des Sensorsystems reduziert wird.

Darüber hinaus ist die Ausnehmung mit einer Abdeckung verschlossen, in welcher eine Steckereinrichtung integriert ist, in die die gebogenen, als Steckerkontakte der Steckereinrichtung dienenden Leadframe-Leiter eingeführt sind. Dies hat den Vorteil, dass zwischen dem Sensorsystem und der Steckereinrichtung keine weiteren Kontaktierungen notwendig sind, was den Montageaufwand durch Reduktion der elektrischen Schnittstellen reduziert. Gleichzeitig wird durch Wegfall der Verbindungsstellen die Störanfälligkeit des Sensorsystems gegenüber Vibrationen und Temperatur verringert. Durch diese Aufbau- und Verbindungstechnik wird die Teilezahl reduziert, sowie die Produktionszeit verkürzt, ohne auf die Flexibilität hinsichtlich Geometrie des Sensorsystems verzichten zu müssen.

In einer Variante ist die Leadframe-Anordnung in der Ausnehmung mit dem Gehäuse verschweißt oder verstemmt. Somit kann die Leadframe-Anordnung mittels einfacher Methoden im Geberzylindergehäuse integriert werden. Die Leadframe-Anordnung bildet mit dem Sensorsystem ein elektrisches Bauteil, welches einfach zu handhaben ist.

Vorteilhafterweise ist die, das Sensorsystem tragende Leadframe-Anordnung in der Ausnehmung des Gehäuses vergossen. Durch den Einsatz einer geeigneten Vergussmasse, alternativ einer Umspritzung, wird die Leadframe-Anordnung im Gehäuse fixiert, gegenüber der Umgebung abgedichtet und gleichzeitig gegenüber mechanischen Einflüssen, wie beispielsweise Vibrationen, geschützt. Auf die Verwendung eines Deckels kann dabei verzichtet werden.
Dadurch wird der Montageaufwand weiter reduziert.

Die Erfindung lässt zahlreiche Ausführungsformen zu. Zwei davon sollen anhand der in der Zeichnung dargestellten Figuren näher erläutert werden.

Es zeigen:
- Figur 1:: Prinzipdarstellung eines hydraulischen Kupplungssystems ,
- Figur 2:: ein Ausführungsbeispiel für ein, auf einer Leadframe-Anordnung angeordnetes Sensorsystem,
- Figur 3:: ein erstes Ausführungsbeispiel der erfindungsgemäßen Kolben-Zylinder-Anordnung,
- Figur 4:: eine weitere Anordnung einer Steckereinrichtung gemäß Figur 3,
- Figur 5:: ein zweites Ausführungsbeispiel der erfindungsgemäßen Kolben-Zylinder-Anordnung,
- Figur 6:: eine Leadframe-Anordnung gemäß Figur 5.

Gleiche Merkmale sind mit gleichen Bezugszeichen gekennzeichnet.

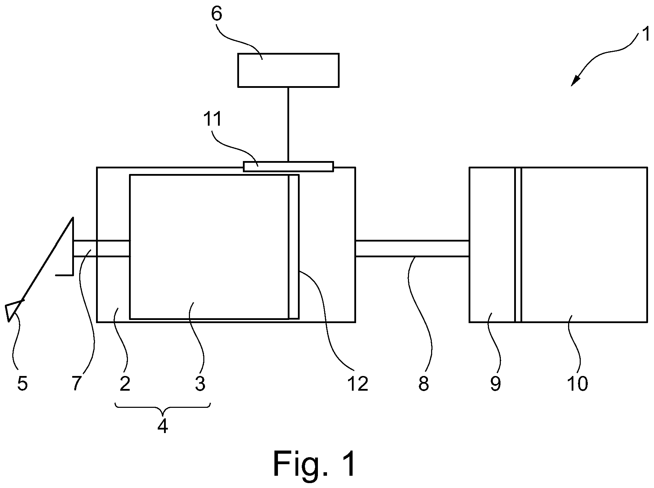

In Figur 1 ist ein hydraulisches Kupplungssystem 1 dargestellt, wie es in Kraftfahrzeugen zum Einsatz kommt. Ein solches Kupplungssystem 1 weist ein hydraulisches Betätigungssystem in Form eines Kupplungsgeberzylinders 4 auf, welches einen als Gehäuse 2 ausgebildeten Zylinder umfasst, in dem ein Kolben 3 axial beweglich gelagert ist. Der Kolben 3 wird von einem Kupplungspedal 5 betätigt, welches an einer Kolbenstange 7 angreift. Über eine Hydraulikleitung 8 ist der Kupplungsgeberzylinder 4 mit einem Nehmerzylinder 9 verbunden, welcher eine Kupplung 10 betätigt. Das Verstellen der Position der Kupplung 10 erfolgt aufgrund des Antriebes des Kolbens 3 durch das Kupplungspedal 5. Der Kupplungsgeberzylinder 4 und die Kupplung 10 mit dem Nehmerzylinder 9 sind dabei räumlich getrennt im Kraftfahrzeug angeordnet.

Außen an dem als Gehäuse 2 dienenden Zylinder ist ein induktives Sensorsystem 11 angeordnet, dem ein elektrisch leitfähiges Target 12 gegenüberliegt, das an der Stirnseite des Kolbens 3 befestigt ist. Das induktive Sensorsystem 11 ist mit einem Steuergerät 6 verbunden.

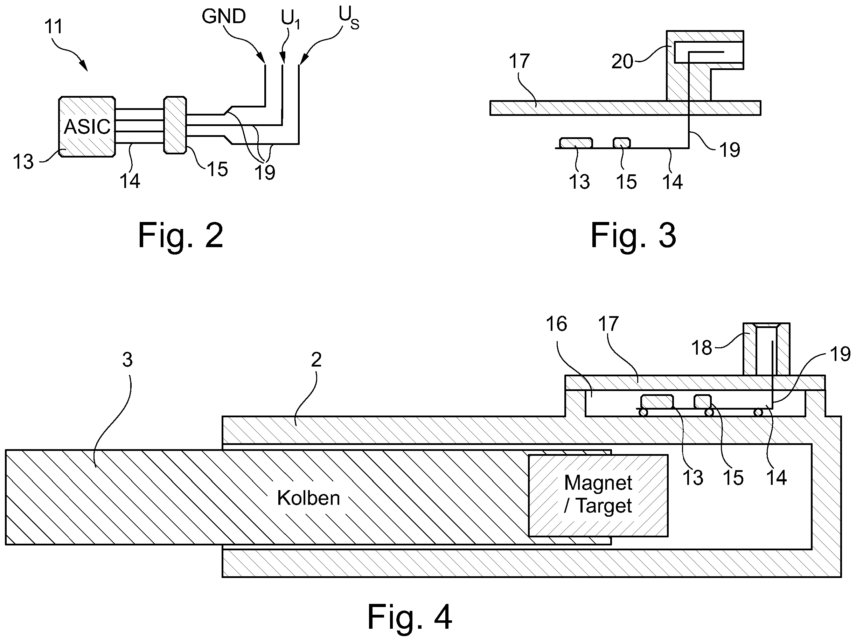

Wie aus Figur 2 ersichtlich, besteht das Sensorsystem 11 aus einem, den Sensor beinhaltenden ASIC 13, welcher auf einer Leadframe-Anordnung 14 verlötet, verschweißt oder verstemmt ist. Darüber hinaus sind auf der Leadframe-Anordnung 14 noch weitere passive Bauelemente 15 angeordnet. Der als Gehäuse 2 ausgebildete Zylinder weist an seiner Außenseite eine Ausnehmung 16 auf, in welcher die, den ASIC 13 und die passiven Bauelemente 15 tragende Leadframe-Anordnung 14 befestigt ist.

Die Ausnehmung 16 ist mit einer Abdeckung 17 verschlossen, so dass das Gehäuse 2 des Kupplungsgeberzylinders 4 gleichzeitig das Sensorgehäuse für das Sensorsystem 11 bildet. Die Abdeckung 17 ist mittels Laserschweißen an dem aus Kunststoff bestehenden Gehäuse 2 befestigt. Die Abdeckung 17 umfasst eine senkrecht von dem Kupplungsgeberzylinder 4 wegweisende Steckereinrichtung 18, in welcher die gebogenen Leadframe-Leiter 19 der Leadframe-Anordnung 14 eingeführt sind. Die Leadframe-Leiter 19 bilden dabei die Steckerkontakte der Steckereinrichtung 18. Ohne zusätzliche Verbindungsstellen erfüllt diese Ausführung die Funktionalität der Kontaktierung des Gegensteckers als auch die Kontaktierung des Sensors. Die Abwinkelung der Leadframe-Leiter 19 erfolgt dabei in einem Stanz-BiegeVerfahren. Im Bereich der Steckereinrichtung 18 werden die Leadframe-Leiter 19 vorumspritzt mit dem Gehäuse 2 verbunden. Hierzu werden die Leadframe-Leiter 19 mit dem Sensorsystem 11 in ein Spritzgusswerkzeug des Gehäuses 2 eingelegt. Das Sensorsystem 11 mit der Leadframe-Anordnung 14 wird in die vorgesehene Ausnehmung 16 des Gehäuses 2 des Kupplungsgeberzylinders 4 angedrückt und mittels geeigneten Verbindungstechniken, wie Verstemmen, mit dem Gehäuse 2 des Kupplungsgeberzylinders 4 verbunden.

In Figur 4 ist eine alternative Ausbildung der Steckereinrichtung 18 dargestellt, in welche ebenfalls die Leadframe-Leiter 19 eingreifen. Auch hier ist die Steckereinrichtung 18 Bestandteil der Abdeckung 17, wobei ein Gegenstecker parallel zum Verlauf der Abdeckung 17 verläuft. Bei dieser Ausführung ist es notwendig, dass die Leadframe-Leiter 19 zweimal in entgegengesetzter Richtung um 90° gebogen werden, um in die Steckereinrichtung 18 eingeführt zu werden und dort als Steckerkontakte zu dienen.

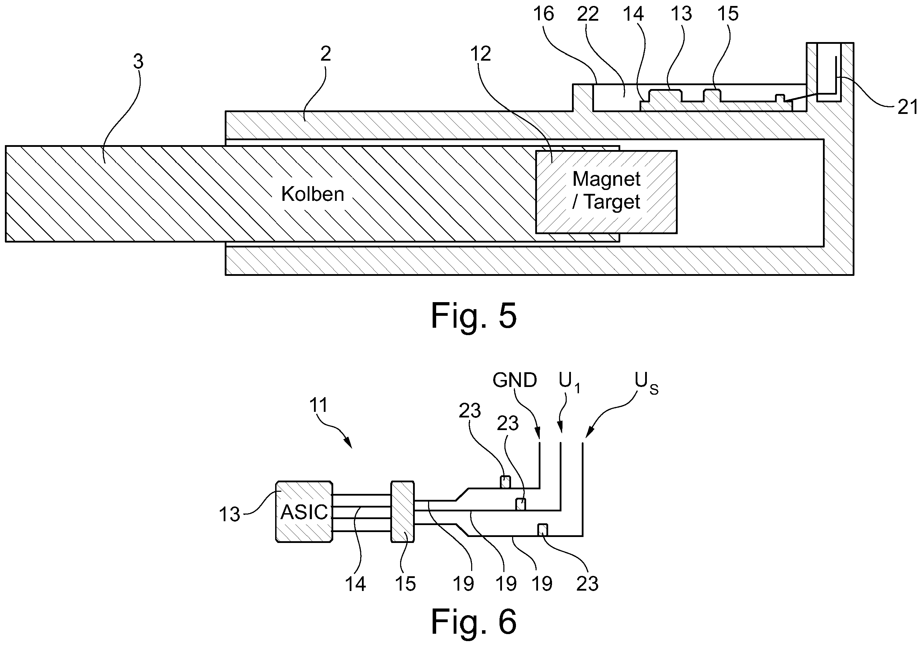

Eine zweite Ausführungsform der erfindungsgemäßen Kolben-Zylinder-Anordnung ist aus Figur 5 ersichtlich. Dabei ist die Steckereinrichtung 20 integrierter Bestandteil des Gehäuses 2 des Kupplungsgeberzylinders 4. Gleichzeitig sind in der Steckereinrichtung 20 separate Steckerkontakte 21 fest positioniert, die mit den Leadframe-Leitern 19 elektrisch verbunden werden. Anschließend wird die, das Sensorsystem 11 tragende Leadframe-Anordnung 14 in die Ausnehmung 16 eingesetzt und dort mit einer Vergussmasse 22 vergossen. Auch hier bildet das Gehäuse 2 des Kupplungsgeberzylinders 4 das integrierte Sensorgehäuse.

Die Verbindung der Steckkontakte 21 mit den Leadframe-Leitern 19 erfolgt an Schnittstellen 23, wie es in Figur 6 dargestellt ist. Dabei kann die elektrische Verbindung beispielsweise durch Verschweißen erfolgen. Dies erfolgt bevor die, das Sensorsystem 11 tragende Leadframe-Anordnung 14 vergossen wird.

Aufgrund der vorgeschlagenen Lösung wird ein Sensorsystem 11 in Leadframe-Ausführung in das Gehäuse 2 einer Kolben-Zylinder-Anordnung eingespritzt und mit den elektrischen Leitern für die Steckkontaktierung mittels geeigneter Verbindungstechnik verbunden. Mit Hilfe einer geeigneten Vergussmasse oder eines lasergeschweißten Deckels 17 wird das Sensorsystem 11 gegenüber Einflüssen der Umgebung abgedichtet. Das Sensorsystem 11 erfasst eine line-are Weginformation und leitet diese an eine nachgeschaltete elektronische Einheit weiter.

### Bezugszeichenliste

- 1: elektrohydraulisches Kupplungssystem
- 2: Zylinder
- 3: Kolben
- 4: Kupplungsgeberzylinder
- 5: Kupplungspedal
- 6: Steuergerät
- 7: Kolbenstange
- 8: Hydraulikleitung
- 9: Nehmerzylinder
- 10: Kupplung
- 11: Sensorsystem
- 12: Target
- 13: ASIC
- 14: Leadframe-Anordnung
- 15: Passive Bauelemente
- 16: Ausnehmung
- 17: Abdeckung
- 18: Steckereinrichtung
- 19: Leadframe-Leiter
- 20: Steckereinrichtung
- 21: Steckerkontakte
- 22: Schnittstellen

## Patentansprüche

1. Kolben-Zylinder-Anordnung, insbesondere für einen Geberzylinder eines Kupplungsbetätigungssystems in einem Kraftfahrzeug, mit einem Kolben (3), welcher axial beweglich in einem als Gehäuse (2) ausgebildeten Zylinder angeordnet ist und einem Sensorsystem (11), welches an dem Gehäuse (2) angeordnet ist und mit einem an dem Kolben (3) befestigten Sensorbestandteil (12) in einer Wirkverbindung steht, **dadurch gekennzeichnet, dass** das Sensorsystem (11) direkt auf einer Leadframe-Anordnung (14) positioniert ist, welche in das Kunststoffgehäuse (2) integriert ist und das Kunststoffgehäuse (2) eine, nach außen offene Ausnehmung (16) aufweist, in welcher die, das Sensorsystem (11) tragende Leadframe-Anordnung (14) positioniert ist, wobei die Ausnehmung (16) mit einer Abdeckung (17) verschlossen ist, in welche eine Steckereinrichtung (18) integriert ist, die die gebogenen, als Steckerkontakte der Steckereinrichtung (18) dienenden Leadframe-Leiter (19) aufnimmt.

2. Kolben-Zylinder-Anordnung nach Anspruch 1, **dadurch gekennzeichnet, dass** die Leadframe-Anordnung (14) in der Ausnehmung (16) mit dem Gehäuse (2) verschweißt oder verstemmt ist.

## Claims

1. A plunger-cylinder assembly, in particular for a master cylinder of a clutch actuation system in a motor vehicle, having a plunger (3) which is arranged axially movably in a cylinder which is configured as a housing (2) and having a sensor system (11) which is attached to the housing (2) and is operatively connected to a sensor (12) fastened to the plunger (3), **characterised in that** the sensor system (11) is positioned directly on a leadframe assembly (14) which is integrated into the plastic housing (2) and the plastic housing (2) has an outwardly open recess (16), in which the leadframe assembly (14) supporting the sensor system (11) is positioned, wherein the recess (16) is closed with a cover (17), in which a plug device (18) is integrated, which receives the bent leadframe conductors (19) serving as plug contacts of the plug device (18).

2. The plunger-cylinder assembly according to claim 1, **characterised in that** the leadframe assembly (14) is welded or caulked to the housing (2) in the recess (16).

## Revendications

1. Agencement piston-cylindre, en particulier pour un maître-cylindre d'un système d'actionnement d'embrayage dans un véhicule automobile, présentant un piston (3), qui est disposé mobile axialement dans un cylindre formant carter (2) et un système de capteur (11) qui est disposé sur le carter (2) et est en liaison active avec un composant de capteur (12) fixé sur le piston (3), **caractérisé en ce que** le système de capteur (11) est positionné directement sur un agencement de grille de connexion (14) qui est inséré dans le carter en matériau synthétique (2) et le carter en matériau synthétique (2) présente un évidement ouvert vers l'extérieur (16) dans lequel est positionné l'agencement de grille de connexion (14) portant le système de capteur (11), l'évidement (16) étant fermé avec un couvercle (17), dans lequel est intégré un dispositif de fiche (18) qui reçoit les conducteurs de grille de connexion courbés (19) servant de contacts de fiche du dispositif de fiche (18).

2. Agencement piston-cylindre selon la revendication 1, **caractérisé en ce que** l'agencement de grille de connexion (14) est soudé ou maté au carter (2) dans l'évidement (16).
